# EUROPÄISCHE PATENTSCHRIFT

(11) **EP 0 512 387 B1**
(45) Veröffentlichungstag und Bekanntmachung des Hinweises auf die Patenterteilung: **28.06.1995**
(21) Anmeldenummer: 92107282.3
(22) Anmeldetag: 29.04.1992
(51) Int. Cl.: F16D 66/02

(54) **Trommelbremse mit Verschleissanzeige**
Drum brake with wear indicator
Frein à tambour avec indicateur d'usure

(30) Priorität: 02.05.1991 DE 9105442 U; 10.08.1991 DE 9109931 U
(43) Veröffentlichungstag der Anmeldung: 11.11.1992
(73) Patentinhaber: Otto Sauer Achsenfabrik Keilberg, 63856 Bessenbach (DE)
(72) Erfinder: Koschinat, Hubert B., c/o Keil & Schaafhausen, W-6000 Frankfurt am Main 1 (DE)
(74) Vertreter: Keil, Rainer A., Dipl.-Phys. Dr.

(56) Entgegenhaltungen:
- EP-A- 0 115 960
- EP-A- 0 258 625
- DE-A- 1 455 913
- DE-U- 9 109 931
- FR-A- 1 551 663
- GB-A- 1 508 192

## Beschreibung

Die Erfindung bezieht sich auf eine Trommelbremse mit Bremsbacken, welche mittels eines mit im wesentlichen S-förmigen Profilflächen den einander zugekehrten freien Enden der Bremsbacken zugeordneten, an einer drehbaren Nockenwelle befestigten Nockens zur Übertragung von Bremskräften gegen die Bremstrommeln relativ zueinander aufspreizbar sind, und mit einer sichtbaren, die Drehstellung der Nockenwelle anzeigenden Verschleißanzeige-Einrichtung.

Derartige Trommelbremsen finden insbesondere an den Rädern von Kraftfahrzeugen Anwendung (vgl. z.B. DE-A-1 455 913). Im allgemeinen wirkt beim Bremsvorgang bspw. ein druckluftbetätigter Membranzylinder über einen automatischen Gestängesteller auf die Nockenwelle des S-Nockens und versetzt diesen in eine Drehbewegung. An den freien Enden der Bremsbacken gelagerte Nockenrollen, welche an dem S-Nocken unter Federkraft anliegen, rollen auf der Profilfläche des S-Nockens ab und führen gegen die Wirkung der Rückstellfeder zu einer Spreizung der Bremsbacken, die sich dadurch mit ihren Bremsbelägen zur Verzögerung der Drehbewegung der Bremstrommel gegen deren Innenfläche legen. Mittels der Rückstellfeder werden die Bremsbacken nach Beendigung des Bremsvorganges von der Bremstrommel zurückgestellt, so daß diese und mit ihm das Rad, an welchem die Bremstrommel befestigt ist, sich wieder frei drehen können. Der automatische Gestängesteller sorgt dafür, daß der Stellweg des S-Nockens im wesentlichen immer solche Werte annimmt, daß unabhängig von dem Verschleißzustand des Bremsbelags die erforderliche Bremskraft auf die Bremstrommel, ausgeübt wird. Statt eines automatischen Gestängestellers kann auch ein manuell-nachstellbarer Gestängesteller eingesetzt werden.

Zur visuellen Erfassung des Verschleißzustandes der Bremsbeläge ist vorgeschlagen worden, auf die, Verzahnung des Gestängestellers einen Zeiger als besonderes Bauteil aufzusetzen oder in den Stängesteller zu integrieren. Diese Maßnahme ist aufwendig und daher nur als Sonderwunsch gegen Aufpreis erhältlich. Ungünstig ist ferner, daß bei derartigen Zeigern nicht definiert ist, wie weit der Zeiger von der Richtung des Gestängestellergehäuses abweichen darf. Dies kann ohne spezielle Kenntnis der jeweiligen Bremse von dem Fahrer oder Monteur des Fahrzeuges auch nicht beurteilt werden, weil der bis zur Verschleißgrenze maximal zulässige Verdrehwinkel kontruktiv unterschiedlich ausgelegt sein kann.

Aufgabe der Erfindung ist es, eine Trommelbremse mit einer visuellen Verschleißanzeige für die Bremsbeläge ohne die genannten Nachteile zu schaffen, die insbesondere bei einfacher Herzustellung eine leichtere Feststellung des Verschleißzustandes zuläßt.

Diese Aufgabe wird mit der Erfindung dadurch gelöst, daß die Nockenwelle an ihrer dem Gestängesteller zugeordneten Stirnfläche Abschnitte unterschiedlicher Oberflächenbeschaffenheit oder -struktur besitzt.

Durch diese Maßnahme, die sich die vom Verschleißzustand des Bremsbelags abhängige Drehstellung des S-Nockens und damit auch der Nockenwelle bei an der Innenfläche der Bremstrommel anliegenden Bremsbelägen zunutze macht, ist eine Sichtkontrolle des Bremsbelegverschleißes von außen sowohl ohne zusätzliche Teile als auch ohne jegliche Demontage von anderen Teilen möglich. An dem dem Gestängesteller zugeordneten stirnseitigen Ende der Nockenwelle ist mittels der Abschnitte sichtbar unterschiedlicher Oberflächenbeschaffenheit oder -struktur die Drehstellung und damit der Verschleißgrad der Bremsbeläge einfach abzulesen. Darüber hinaus ist die genannte Stirnfläche aus Ende der Nockenwelle weitgehend unempfindlich gegen Beschädigungen bzw. von außen einwirkendem Schmutz.

Insbesondere erweist es sich, weil besonders einfach herzustellen und zu erkennen, als besonders vorteilhaft, die Stirnfläche der Nockenwelle mit einer bzw. einem sich quer zur Mittelachse der Nockenwelle erstreckende Nut, Schlitz oder dergleichen linienförmigen Markierung zu versehen, so daß die Drehstellung des S-Nockens in seiner Bremsstellung leicht erkennbar ist.

Eine besonders leichte Erkennbarkeit der Drehstellung des S-Nockens ergibt sich ferner dadurch, daß die linienförmige Markierung durch die Mittelachse der Nockenwelle verläuft und die Stirnfläche der Nockenwelle in zwei im wesentlichen halbkreisförmige Kreisflächensegmente unterteilt.

Dann ist die Verschleißgrenze besonders gut und mit Augenmaß abschätzbar, wenn die linienförmige Markierung bei erreichen der Verschleißgrenze möglichst genau in die Richtung der Mittelachse des Achskörpers bzw. der Bremstrommel weist.

Eine weitere vorteilhafte Ausgestaltung der Erfindung besteht darin, die Stirnfläche der Nockenwelle in aneinandergrenzende Bereiche unterschiedlicher Rauhigkeit, Reflexionsvermögens oder dgl. Oberflächenstruktur auf zuteilen, so daß die Drehstellung des S-Nockens besonders dauerhaft gut erkennbar bleibt.

Auch kann die Stirnfläche der Nockenwelle im Rahmen des Erfindungsgedankens in aneinandergrenzende Bereiche unterschiedlicher Farbpigmentierung aufgeteilt sein.

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung.

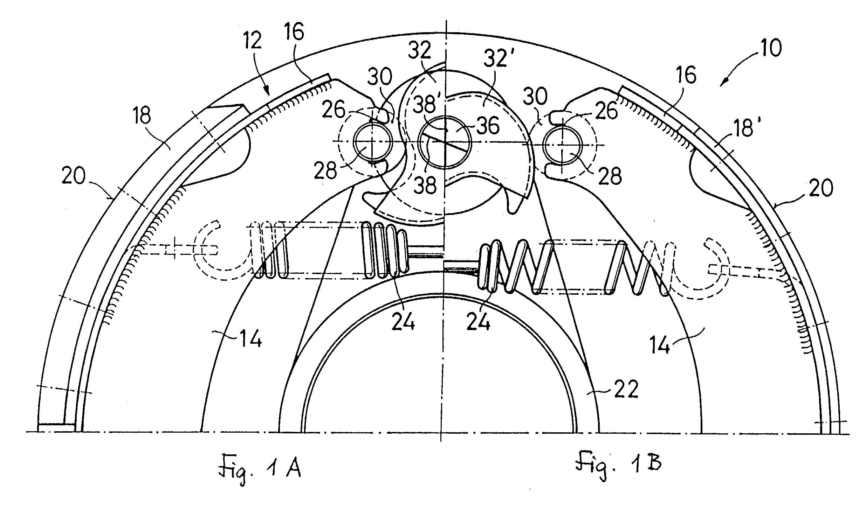

Die einzige Figur zeigt schematisch in Ansicht von der Seite des Gestängestellers aus gesehen die obere Hälfte einer erfindungsgemäßen Trommelbremse, wobei Fig. 1A (linke Seite) die Verhältnisse bei neuem und Fig. 1B (rechte Seite) die Verhältnisse bei verschlissenem Bremsbelag veranschaulicht.

Der in der Zeichnung dargestellte obere Teil einer Trommelbremse 10 weist zwei Bremsbacken 12 auf, welche jeweils aus zwei Bremsbackenstegen 14, einem der Krümmung der Innenfläche der Bremstrommel 20 entsprechenden Bremsbelagträger 16 und einem darauf angeordneten Bremsbelag 18 im wesentlichen gleichmäßiger Stärke bestehen. In Fig. 1A ist ein neuwertiger Bremsbelag 18 und in Fig. 1B ein verschlissener Bremsbelag 18′ gezeigt. Die Bremsbacken 12 selbst sind an einem Bremsträger 22 schwenkbar gelagert. Am freien Ende der Bremsbackenstege 14 ist in einer Ausnehmung 26 jeweils eine Nockenrolle 30 angeordnet, die über axiale Zapfen 28 drehbar gelagert ist. Zwischen den beiden Nockenrollen 30 der Bremsbackenstege 14 ist ein im wesentlichen S-förmiger Nocken 32, 32′ angeordnet, der über einen nicht dargestellten Gestängesteller von einer Nockenwelle 36 zur Einleitung eines Bremsvorganges in Drehung versetzt wird. Aufgrund der Drehung des S-Nockens 32, 32′ werden die Bremsbacken 12 gegen die Wirkung einer Rückstellfeder 24 an die Innenfläche der Bremstrommel 20 gepreßt. Nach Beendigung des Bremsvorganges werden die Bremsbacken 12 durch die Rückstellfedern 24 wieder zurückgezogen.

Die Drehstellung des S-Nockens 36 bei an der Bremstrommel 20 anliegenden Bremsbelägen 18, 18′ ist ein Maß für den Verschleißgrad der Bremsbeläge 18, 18′. In Fig. 1A ist die Drehstellung des S-Nockens 32 für den unverschlissenen Bremsbelag 18 dargestellt. Liegen dagegen verschlissene Bremsbeläge 18′ vor, wie dies aus der Darstellung der Fig. 1B ersichtlich ist, nimmt der S-Nocken 32′ die demgegenüber winkelversetzte Drehstellung ein.

Somit bietet die Drehstellung des S-Nockens 32, 32′ bzw. der drehfest mit diesem verbundenen Nockenwelle 36 eine Möglichkeit der Erkennung des Verschleißgrades der Bremsbeläge 18, 18′, welche sich die Erfindung zunutze macht.

Die unterschiedliche Drehstellung der Nockenwelle 36 wird nach der Erfindung bspw. dadurch deutlich sichtbar gemacht, daß deren an dem dem Gestängesteller zugeordneten Ende vorgesehenen Stirnfläche mit einer quer zur Mittelachse der Nockenwelle 36 verlaufenden Nut 38, 38′ versehen ist. Zur Charakterisierung der unterschiedlichen Drehstellungen ist diese Nut in Fig. 1A mit der Bezugsziffer 38 und in Fig. 1B mit der Bezugsziffer 38′ bezeichnet. Im dargestellten Ausführungsbeispiel erstreckt sich die Nut 38, 38′ über die gesamte Stirnfläche der Nockenwelle 36 und teilt diese in zwei in etwa halbkreisflächenförmige Kreissegmente. Beispielsweise kann ein verschlissener Bremsbelag 18′ dadurch besonders gut erkennbar sein, daß die Nut 38′ möglichst genau in Richtung der Mittelachse der Bremstrommel 20 weist, wenn die Verschleißgrenze erreicht ist. Vorher nimmt die Nut 38 irgendeine Schrägstellung ein.

Weitere, in der Figur nicht dargestellte Möglichkeiten der Erkennbarkeit der Drehstellung der Nockenwelle 36 in der Drehstellung bestehen bspw. darin, diese Stirnfläche mit anderen die Drehstellung anzeigenden Markierungen zu versehen. Die Markierung kann z.B. in einer Oberflächenstrukturierung, Farbpigmentierung oder dgl. im Bereich der Stirnfläche der Nockenwelle 36 bestehen. Die Markierungen der Stirnfläche sind nur derart anzuordnen, daß die Drehstellung der Nockenwelle 36 erkennbar ist, wobei die Markierung sich bei Erreichen der Verschleißgrenze vorzugsweise an der Mittelachse der Bremstrommel 20 ausrichten sollte .

### Bezugszeichenliste:

- 10: Trommelbremse
- 12: Bremsbacken
- 14: Bremsbackensteg
- 16: Bremsbelagträger
- 18: Bremsbelag (neu)
- 18′: Bremsbelag (verschlissen)
- 20: Bremstrommel
- 22: Bremsträger
- 24: Rückstellfeder
- 26: Ausnehmungen
- 28: Zapfen (axial)
- 30: Nockenrollen
- 32: S-Nocken (in Stellung bei neuem Bremsbelag)
- 32′: S-Nocken (in Stellung bei verschlissenem Bremsbelag)
- 36: Nockenwelle
- 38: Nut (in Stellung bei neuem Bremsbelag)
- 38′: Nut (in Stellung bei verschlissenem Bremsbelag)

## Patentansprüche

1. Trommelbremse (10) mit Bremsbacken (12), welche mittels eines mit im wesentlichen S-förmigen Profilflächen den einander zugekehrten freien Enden der Bremsbacken (12) zugeordneten an einer drehbaren Nockenwelle (36) befestigten Nockens (32, 32′) zur Übertragung von Bremskräften gegen die Bremstrommeln (20) relativ zueinander aufspreizbar sind, und mit einer sichtbaren, die Drehstellung der Nockenwelle (36) anzeigenden Verschleißanzeige-Einrichtung, dadurch gekennzeichnet, daß die Nockenwelle (36) an ihrer einem Gestängesteller zugeordneten Stirnfläche Abschnitte unterschiedlicher Oberflächenbeschaffenheit oder -struktur besitzt.

2. Trommelbremse nach Anspruch 1, dadurch gekennzeichnet, daß die Abschnitte eine bzw. einen sich quer zur Mittelachse der Nockenwelle erstreckende Nut (38, 38′), Schlitz oder dgl. linienförmige Markierung aufweisen.

3. Trommelbremse nach Anspruch 2, dadurch gekennzeichnet, daß die linienförmige Markierung durch die Mittelachse der Nockenwelle (36) verläuft und die Stirnfläche der Nockenwelle (36) in zwei im wesentlichen halbkreisförmige Kreisflächensegmente unterteilt.

4. Trommelbremse nach Anspruch 2 oder 3, dadurch gekennzeichnet, daß die linienförmige Markierung bei Erreichen der Verschleißgrenze in die Richtung der Mittelachse des Achskörpers bzw. der Bremstrommel (20) weist.

5. Trommelbremse nach einem der Ansprüche 1 bis 4, dadurch gekennzeichnet, daß die Stirnfläche der Nockenwelle (36) in aneinandergrenzende Bereiche unterschiedlicher Rauhigkeit, Reflexionsvermögens oder dgl. Oberflächenstrukturierung aufgeteilt ist.

6. Trommelbremse nach einem der Ansprüche 1 bis 5, dadurch gekennzeichnet, daß die Stirnfläche der Nockenwelle (36) in aneinandergrenzende Bereiche unterschiedlicher Farbpigmentierung aufgeteilt ist.

## Claims

1. A drum brake (10) having brake shoes (12) which can be urged further apart from each other to apply braking forces to the brake drum (20) by means of a cam (32,32') with substantially S-shaped contours matching the opposing ends of the brake shoes (12) and keyed on a rotating camshaft (36), and also having an optical wear monitor indicating the angle of rotation of the camshaft (36), characterized in that the endface of the camshaft (36) facing an associated brake adjustment rod has sections differing in nature or structure.

2. A drum brake as in Claim 1, characterized in that the sections have a slit or slits (38,38') or similar linear marking(s) extending transversely to the camshaft axis.

3. A drum brake as in Claim 2, characterized in that the linear marking passes through the axis of the camshaft (36) and divides the endface of the camshaft (36) into two substantially semicircular segments.

4. A drum brake as in Claim 2 or 3, characterized in that on reaching the wear limit the linear marking lies in the direction of the central axis of the axle body or the brake drum (20).

5. A drum brake as in any of Claims 1 to 4, characterized in that the endface of the camshaft (36) is divided into adjacent zones differing in roughness, reflectivity or similar surface structuring.

6. A drum brake as in any of Claims 1 to 5, characterized in that the endface of the camshaft (36) is divided into adjacent zones differing in pigmentation colouring.

## Revendications

1. Frein à tambour (10) comportant des mâchoires (12) de frein qui peuvent être écartées l'une vis-à-vis de l'autre au moyen d'une came (32, 32') qui est solidaire d'un arbre à came (36) tournant et est pourvue de surfaces de came profilées sensiblement en forme de S qui sont associées aux extrémités libres en vis-à-vis des mâchoires (12) de frein aux fins d'appliquer des efforts de freinage sur les tambours de frein (20), ainsi qu'un dispositif visible d'indication d'usure qui indique la position en rotation de l'arbre à came (36), caractérisé par le fait que l'arbre à came (36) est pourvu sur sa face frontale associée à la coupelle de tringlerie des segments avec un état de surface ou une structure de surface différent.

2. Frein à tambour selon la revendication 1, caractérisé par le fait que les segments présentent une rainure (38, 38'), une fente ou un repère similaire en forme de ligne qui s'étend transversalement à l'axe médian de l'arbre à came.

3. Frein à tambour selon la revendication 2, caractérisé par le fait que le repère en forme de ligne passe par l'axe médian de l'arbre à came (36) et que la face frontale de l'arbre à came (36) est divisée en deux segments de cercle sensiblement en forme de demi cercle.

4. Frein à tambour selon la revendication 2 ou la revendication 3, caractérisé par le fait que, lorsque la limite d'usure est atteinte, le repère en forme de ligne est orientée en direction de l'axe médian du corps d'essieu ou du tambour de frein (20).

5. Frein à tambour selon l'une des revendications 1 à 4, caractérisé par le fait que la face frontale de l'arbre à came (36) est divisée en zones contigües avec des rugosités, des pouvoirs réfléchissants ou des structures de surface de ce type différents.

6. Frein à tambour selon l'une des revendications 1 à 5, caractérisé par le fait que la face frontale de l'arbre à came (36) est divisée en zones contigües avec des pigmentations colorées différentes.
